Europäisches Patentamt

**European Patent Office**

**Office européen des brevets**

(19)

(11) Veröffentlichungsnummer: **0 016 491**
**B1**

(12)

# EUROPÄISCHE PATENTSCHRIFT

(45) Veröffentlichungstag der Patentschrift:
**17.11.82**

(51) Int. Cl.³: **G 03 B 41/16**, G 03 B 39/00

(21) Anmeldenummer: **80200194.1**

(22) Anmeldetag: **03.03.80**

(54) **Anlage zur Sichtbarmachung von bewegten Teilen.**

(30) Priorität: **27.03.79 CH 2822/79**

(43) Veröffentlichungstag der Anmeldung:
**01.10.80 Patentblatt 80/20**

(45) Bekanntmachung des Hinweises auf die Patenterteilung:
**17.11.82 Patentblatt 82/46**

(84) Benannte Vertragsstaaten:
**BE CH DE FR GB IT NL SE**

(56) Entgegenhaltungen:
**DE-A-2 105 259**
**US-A-1 870 310**
**US-A-4 092 537**
**SOLDAT UND TECHNIK, Band 11, Nr. 2, Februar**
**1968, Frankfurt am Main, DE, G. THOMER: »Die**
**Röntgen-Blitz-photographie«, Seiten 70—75**

(73) Patentinhaber: **Werkzeugmaschinenfabrik**
**Oerlikon-Bührle AG, Birchstrasse 155, CH-8050 Zürich**
**(CH)**

(72) Erfinder: **Holzberger, Johann, Rietlistrasse 360,**
**CH-8165 Schöfflisdorf (CH)**

BUNDESDRUCKEREI BERLIN

# Anlage zur Sichtbarmachung von bewegten Teilen

Die Erfindung betrifft eine Anlage zur Sichtbarmachung von schnellbewegten Teilen in einem Gehäuse, insbesondere von Geschossen in einer Feuerwaffe, mit einem Beschleuniger, der eine unsichtbare Strahlung mit mindestens 300 Pulsen pro Sekunde erzeugt, mit einem Aufnahmegerät, enthaltend Bleiplatten als Strahlungsschutz, einen Bildwandler zur Umwandlung der Strahlung des Beschleunigers in sichtbare Strahlung, eine Umlenkeinrichtung zum Herauslenken des Bildes aus dem Bereich der Strahlung des Beschleunigers und eine Kamera für mindestens 500 Bilder pro Sekunde.

Es ist eine Anlage dieser Art zur Sichtbarmachung von schnellbewegten Teilen in einem Gehäuse aus der US-Patentschrift Nr. 4 092 537 bekannt. Diese Anlage besteht aus einem Beschleuniger, der eine unsichtbare Strahlung von mindestens 300 Pulsen pro Sekunde erzeugt, sowie aus einem Aufnahmegerät, enthaltend Bleiplatten als Strahlungsschutz, einen Bildverstärker zur Umwandlung der Strahlung des Beschleunigers in sichtbare Strahlung, eine Umlenkeinrichtung, um das Bild aus dem Bereich der Strahlung des Beschleunigers herauszulenken, und eine Filmkamera für mindestens 500 Bilder pro Sekunde.

Diese bekannte Anlage ist jedoch sehr empfindlich auf Erschütterungen und eignet sich daher nicht zur Sichtbarmachung von Geschossen in einer Feuerwaffe.

Die Aufgabe, welche mit der vorliegenden Erfindung gelöst werden soll, besteht in der Schaffung einer Anlage, bei der die Übertragung von beim Betrieb der Anlage auftretenden Erschütterungen auf den Beschleuniger vermieden wird.

Diese Aufgabe wird erfindungsgemäß dadurch gelöst, daß ein Schutzkasten zur Aufnahme des erschütterungsempfindlichen Beschleunigers eine Doppelwanne aufweist und der Raum zwischen den beiden Wannen vorn, auf beiden Seiten, hinten und am Boden mit mehreren Lagen filzüberzogener elastischer Bälle ausgefüllt ist.

Es ist zwar in der Technik seit langem bekannt, erschütterungsempfindliche Geräte schwingungsgedämpft aufzustellen, wenn immer dies erforderlich ist. Es wird auf die US-Patentschrift Nr. 1 870 310 hingewiesen. Bei dieser bekannten Dämpfungseinrichtung ist jedoch die innere Reibung viel zu klein, um die Schwingungen innert nützlicher Frist abzubauen.

Auch die Verwendung von Strahlenblenden zwischen Beschleuniger und den sichtbar zu machenden Teilen ist bekannt. Es wird auf die Druckschrift »Soldat und Technik«, 2, 1968, Bild 5, Seite 71, verwiesen.

Ein Ausführungsbeispiel der erfindungsgemäßen Anlage ist im folgenden anhand der Zeichnungen ausführlich beschrieben. Es zeigt

Fig. 1 den Aufbau der ganzen Anlage im Grundriß,

Fig. 2 eine schematische Darstellung des Beschleunigers im Grundriß,

Fig. 3 eine schematische Darstellung des Bildverstärkers,

Fig. 4 Grundriß, Seitenriß und Aufriß der Doppelwanne des Schutzkastens.

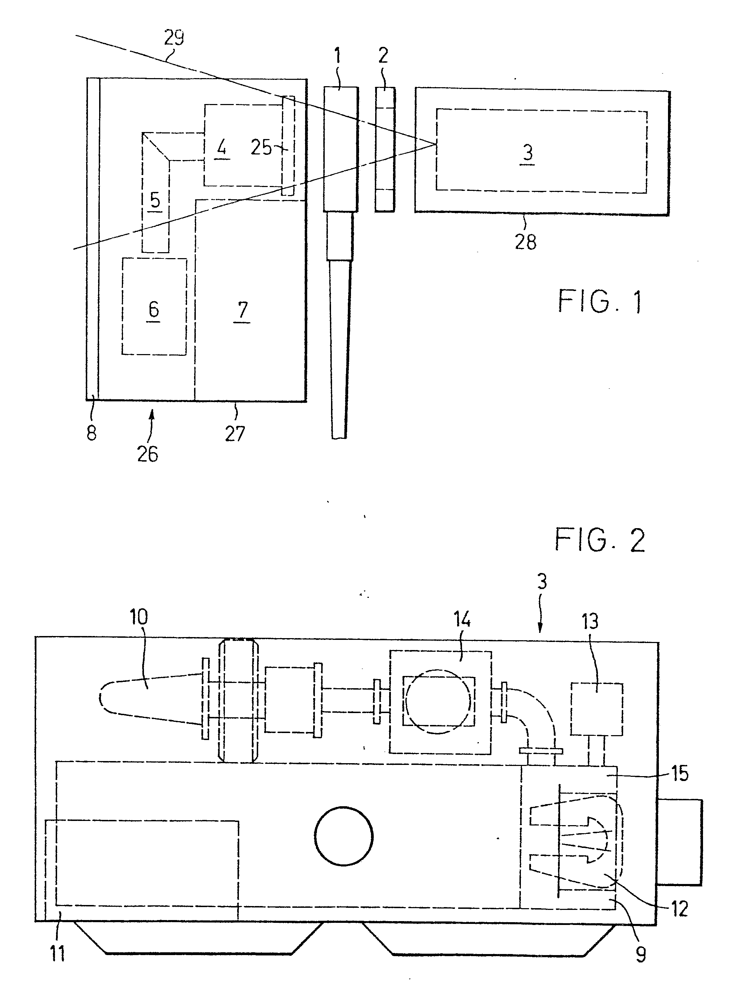

Gemäß Fig. 1 steht das zu durchleuchtende Objekt, z. B. eine Kanone 1 zusammen mit einer Strahlenblende 2, zwischen einem Beschleuniger 3 und einem Bildverstärker 4. Hinter dem Bildverstärker 4 befindet sich ein Lichtumlenkrohr 5, das den Lichtstrahl auf eine vor der kurzwelligen Strahlung geschützte Kamera lenkt, die sich in einem Bleihaus 6 befindet. Zum Schutz dieser Kamera sind an zwei Seiten des Bleihauses noch Bleiwände 7 und 8 angeordnet.

## Der Schutzkasten 28 des Beschleunigers 3

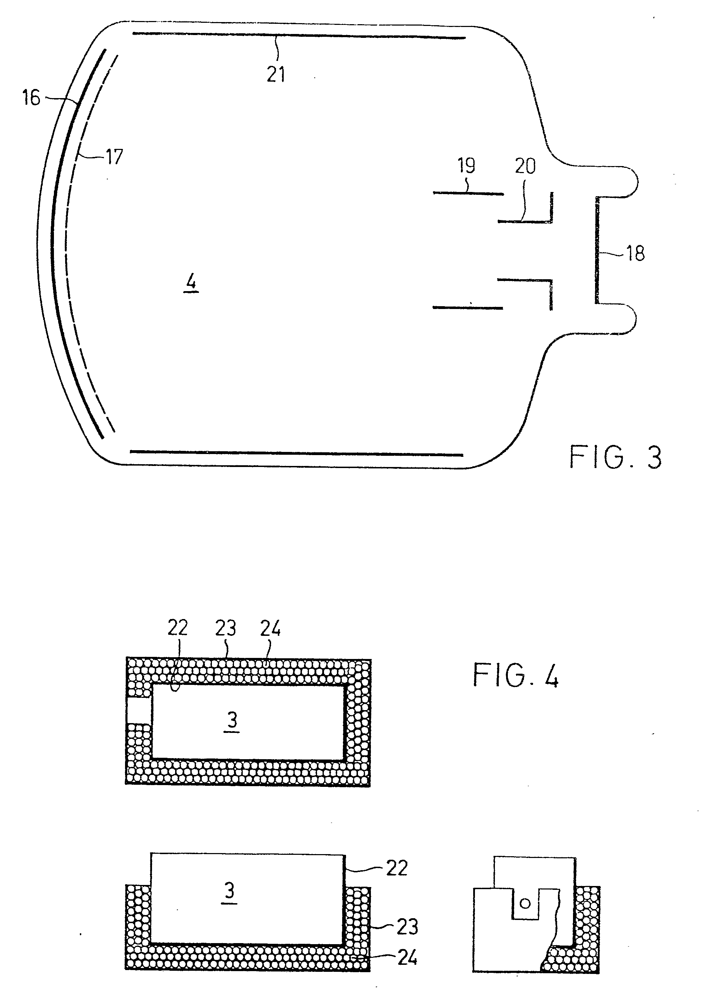

Der Beschleuniger 3 ist erschütterungsempfindlich, und die zu durchleuchtende Kanone 1 bewirkt beim Abschuß starke Erschütterungen. Es ist daher notwendig, den Beschleuniger 3 in einem Schutzkasten 28 vor Schwingungen zu schützen. Dieser Schutzkasten 28, der auch zum Transport des Beschleunigers 3 verwendet wird, weist eine Doppelwanne auf. Der Raum zwischen den beiden Wannen ist, gemäß Fig. 4, vorn, auf beiden Seiten, hinten und am Boden mit je drei Lagen von Tennisbällen, z. B. insgesamt 4000 Tennisbälle, aufgefüllt. Ferner, jedoch nicht dargestellt, sind am Schutzkasten 28 vier einzeln schwenkbare Räder sowie drei einzeln verstellbare Hebevorrichtungen vorhanden, welche es ermöglichen, den Beschleuniger 3 leicht an die gewünschte Stelle in die gewünschte Lage zu bringen. Die äußere Wanne ist zusätzlich auf konventionellen Schwingungsdämpfern gelagert.

Im Hinblick auf die beim Abschuß des Geschützes erzeugten Pulvergase ist der Schutzkasten des Beschleunigers 3 in nicht dargestellter Weise gasdicht verschlossen. Im Hinblick auf den Transport des Beschleunigers 3 ist der Schutzkasten heizbar. Es sind genügend große Öffnungen für die Wartung vorhanden.

Zur Abschätzung der erforderlichen Schwingungsdämpfung wurde angenommen, daß der Beschleuniger nicht beschädigt wird, wenn die beim Abschuß der Kanone 1 bewirkten Erschütterungs-Beschleunigungen kleiner als die Erdbeschleunigung $g = 9,81$ m/sec$^2$ sind und daß die Funktionstüchtigkeit erhalten bleibt, wenn diese Erschütterungs-Beschleunigungen kleiner als $1/3$ der Erdbeschleunigung g sind.

Bei Schießversuchen hat es sich jedoch gezeigt, daß die auf konventionellen Schwingungsdämpfern gelagerte äußere Wanne des Schutzkastens noch Erschütterungs-Beschleunigungen von 10 g ausgesetzt ist und daß mit Hilfe der drei Schichten von Tennisbällen die innere Wanne des Schutzkastens nur noch Erschütterungs-Beschleunigungen von ca. $^1/_3$ der Erdbeschleunigung g ausgesetzt ist. Es wird somit durch die Tennisbälle eine Dämpfung von 10 g auf 0,3 g erreicht, was mit handelsüblichen Schwingungsdämpfern nicht erreichbar ist.

Die Abklingzeit auf 10% der ursprünglichen Amplitudenhöhe der bei einem Schuß verursachten Schwingung beträgt mit dieser Schwingungsdämpfung mit hohem Reibungseffekt, der durch die filzüberzogenen Oberflächen der Bälle verursacht wird, weniger als 50 Millisek. Messungen haben ferner gezeigt, daß die durch Erschütterung beim Abschuß der Kanone bewirkte Schwingung dank der Dämpfung so schnell abklingt, daß Serienfeuer sich schwingungstechnisch gesehen nicht vom Einzelschuß unterscheidet.

### Der Beschleuniger 3

Für den Beschleuniger 3 als Erzeuger einer Strahlung im Bereich von 1 – 10 Mega-Elektronenvolt eignet sich ein handelsübliches Gerät. Dieses Gerät weist, gemäß Fig. 2, ein Beschleunigerrohr 9 auf, das eine stehende elektromagnetische Welle enthält zur Beschleunigung der Elektronen. Außerhalb des Beschleunigerrohres 9 befindet sich Magnetron 10 zur Erzeugung der Welle und eine Elektronenquelle 11 zur Erzeugung von freien Elektronen. Zur Begrenzung des Strahls ist ein Kollimator 12 am einen Ende des Beschleunigerrohres 9 angeordnet. Zur Erzeugung des nötigen Vacuums ist eine Jonen-Getter-Pumpe 13 angeordnet. Ferner ist ein Zirkulator 14 zum Umlenken der zur Vernichtung bestimmten reflektierten Welle vorhanden.

Da dieses Gerät wie gesagt handelsüblich unter dem Namen Linatron 1500 von Varian erhältlich ist, kann hier auf eine ausführliche Beschreibung verzichtet werden.

Aus der Elektronenquelle am einen Ende des Beschleunigerrohres 9 treten Elektronen aus, auf welche die stehende Welle des Beschleunigerrohres einwirkt. Die Feldstärke dieser stehenden Welle beschleunigt die Elektronen. Die auf annähernd Lichtgeschwindigkeit beschleunigten Elektronen prallen dann auf eine Wolframplatte und erzeugen eine Bremsstrahlung, die zum größten Teil in einem Strahlkegel von etwa 30° Öffnung austritt.

Beim hier beschriebenen Ausführungsbeispiel wird eine Maschine verwendet, die in drei Energiebereichen bei 5, bei 7,5 und bei 10 MeV (Mega-Elektronenvolt-Energie) arbeiten kann; d. h. einer Energie, die einer durchlaufenen Spannungsdifferenz der Elektronen von 5, 7,5 oder 10 Millionen Volt entspricht. Der bei 10 MeV fließende Elektronenstrom von etwa 70 Mikro-Ampère ergibt eine Leistung von etwa 700 Watt bei 10 Millionen Volt.

Die Strahlungsleistung des Beschleunigers beträgt 2000 Rad/Minute bei 300 Impulsen/Sekunde.

### Die Strahlenblende 2

Da die zu untersuchende Feuerwaffe im interessierenden Bereich unterschiedliche Wandstärken aufweist, ist es notwendig, zwischen Waffe 1 und Beschleuniger 3 eine Strahlenblende 2 anzuordnen, um zu verhindern, daß der Strahl beim Durchdringen der Waffe 1 an einzelnen Stellen ungeschwächt auf den Bildverstärker 4 auftrifft. Ein ungeschwächter Strahl ist in der Lage, den Bildverstärker 4 zu zerstören. Aus der Härte der verwendeten Strahlung ergibt sich, daß für die Strahlenblende 2 viele Bleiplatten erforderlich sind, um den Bildverstärker 4 wirksam zu schützen. Versuche haben gezeigt, daß durch Änderung der Schlitzbreite der Strahlenblende eine wesentliche Bildverbesserung erreichbar ist. Wenn nur 1% der Aufnahmefläche des Bildverstärkers zuviel Strahlung erhält, wird die Empfindlichkeit des Bildverstärkers so klein, daß das Bild unbrauchbar wird.

### Der Schutzkasten 27 für die Aufnahme-Apparatur 26

Die Aufnahme-Apparatur 26 ist ebenfalls in einem Schutzkasten 27 angeordnet. Dieser Schutzkasten 27 ist mit Schwingungsdämpfern versehen und kann hydraulisch gehoben und gesenkt werden (nicht dargestellt). Der Bildverstärker 4 ist direkt auf einer schwingungsgedämpften Platte angeordnet. Das Lichtumlenkrohr 5 und die Kamera 6 sind auf einer optischen Bank befestigt, die sich auf der genannten schwingungsgedämpften Platte befindet.

Der Bildverstärker 4 befindet sich in dem vom Beschleuniger 3 ausgesandten Strahlkegel 29 und ist durch eine dünne Aluminiumplatte gegen Pulvergase und Luftschall geschützt. Die Kamera 6 befindet sich außerhalb des Strahlkegels und ist durch Bleiplatten 7, 8 im Gewicht von z. B. circa einer Tonne vor Strahlung geschützt. Auch die Seiten- und Deckenwände des Schutzkastens für die Aufnahme-Apparatur ist mit Bleiwänden zum Schutz vor Streustrahlen verkleidet.

Der Schutzkasten 27 schützt die Aufnahme-Apparatur vor Pulvergasen und weist Öffnungen für den Durchtritt der Kabel für Bildverstärker 4 und für die Kamera auf.

### Der Bildverstärker 4

Gemäß Fig. 3 weist der Bildverstärker 4 eine erste Schicht 16 aus Cäsium-Jodid auf, welche beim Auftreffen von Gamma-Strahlen Lichtblitze erzeugt. Hinter dieser ersten Schicht 16 befindet sich eine zweite Schicht 17, eine sogenannte Photokathode, in welche die Lichtblitze eindringen können, wodurch freie Elektronen erzeugt werden. Diese freien Elektronen befinden sich im Innern einer Fokussier-Elektrode 21. Hier wirkt ein starkes Potential auf die Elektronen, wodurch die Elektronen beschleunigt und fokussiert auf eine kleine Fläche 18 einer Phosphor-Schicht auftreffen. Vor dieser Fläche 18 befinden sich zwei Anoden 19 und 20.

Die Empfindlichkeit der Cäsium-Jodid-Schicht ist vom Energiebereich der Strahlung abhängig, d. h., die Anzahl Lichtblitze, welche von der Strahlung des Beschleunigers in dieser Cäsium-Jodid-Schicht erzeugt werden, hängt von der Energie der Strahlung ab. Der Wirkungsgrad der Cäsium-Jodid-Schicht hängt jedoch nicht nur von der Energie der Strahlung, sondern auch noch von der Schichtdicke ab. Je größer die Schichtdicke, um so mehr Gammaquanten bleiben in der Cäsium-Jodid-Schicht stecken. Falls die Schicht jedoch zu dick ist, werden die vorn erzeugten Lichtblitze hinten nicht mehr vorhanden sein, weil sie absorbiert oder reflektiert wurden.

Die Elektronen bringen die Phosphor-Schicht der Fläche 18 zum Leuchten.

Die Nachleuchtdauer der Phosphor-Schicht der kleineren Fläche 18 bestimmt die Zahl der Bilder, die pro Sekunde aufgenommen werden können. Die Zeit, bis die leuchtende Schicht auf ein Zehntel ihrer Anfangshelligkeit abgeklungen ist, beträgt 1 Millisekunde. Es ist somit möglich, 500 Bilder pro Sekunde aufzunehmen.

Da aus einem Gamma-Quant etwa 176 Lichtquanten gebildet werden und das Flächenverhältnis von Eingangsschirm zu Ausgangsschirm etwa 100 : 1 ist, ergibt sich ein Verstärkungsfaktor 17 600.

### Konversions-Elektronen-Folie 25

Vor dem Bildverstärker 4 ist eine Konversions-Elektronen-Folie 25 angeordnet, welche ebenfalls eine Verbesserung der Bildqualität bringt. Vorzugsweise wird eine 0,5–1,0 mm dicke Goldfolie verwendet. Diese Folie dient dazu, die vom Beschleuniger ausgesandten »harten« Strahlen in »weichere« Strahlen umzuwandeln, welche sich für den Bildverstärker besser eignen. Die Folie besteht aus einem Material, z. B. Gold, das bei Bestrahlung verhältnismäßig viele Konversions-Elektronen erzeugt.

### Das Lichtumlenkrohr 5

Hinter dem Bildverstärker befindet sich das Lichtumlenkrohr 5, das ein abgewinkeltes teleskopartig ausziehbares Rohr aufweist sowie einen Umlenkspiegel von höchster optischer Güte. Dieses Lichtumlenkrohr 5 bringt einen unerwünschten Lichtverlust, ist aber nötig, da 90% der Strahlung des Beschleunigers 3 den Bildverstärker 4 durchdringt. Diese den Bildverstärker 4 durchdringende Strahlung würde aber den Film vollständig schwärzen, falls die Kamera 6 unmittelbar hinter dem Bildverstärker 4 angeordnet wäre. Das Lichtumlenkrohr 5 ermöglicht es, die Kamera 6 außerhalb des Strahlenkegels anzuordnen. Ein langer Lichtweg vom Ausgangsschirm des Bildverstärkers 4 bis auf die Linse der Kamera 6 ist daher nicht zu vermeiden.

### Die Kamera 6

Die hinter dem Lichtumlenkrohr 5 angeordnete Kamera 6 soll einen möglichst kleinen internen Lichtverlust aufweisen. Sie arbeitet mit intermittierendem Filmtransport und ermöglicht höchstens 500 Bilder pro Sekunde. Eine solche Kamera 6 ist mechanisch sehr empfindlich, und sie benötigt eine aufwendige Halbleiterelektronik. Sowohl der Film als auch diese Elektronik sind daher durch Bleiplatten sorgfältig vor den Gamma-Quanten des Strahlenkegels geschützt. Die Kamera 6 ist daher von z. B. etwa einer Tonne Blei umgeben.

### Patentansprüche

1. Anlage zur Sichtbarmachung von schnellbewegten Teilen in einem Gehäuse, insbesondere von Geschossen in einer Feuerwaffe, mit einem Beschleuniger (3), der eine unsichtbare Strahlung mit mindestens 300 Pulsen pro Sekunde erzeugt, mit einem Aufnahmegerät (27), enthaltend Bleiplatten (7, 8) als Strahlungsschutz, einen Bildwandler (4) zur Umwandlung der Strahlung des Beschleunigers in sichtbare Strahlung, eine Umlenkeinrichtung (5) zum Herauslenken des Bildes aus dem Bereich der Strahlung des Beschleunigers und eine Kamera (6) für mindestens 500 Bilder pro Sekunde, dadurch gekennzeichnet, daß ein Schutzkasten (28) zur Aufnahme des erschütterungsempfindlichen Beschleunigers (3) eine Doppelwanne (22, 23) aufweist und der Raum zwischen den beiden Wannen (22, 23) vorn, auf beiden Seiten, hinten und am Boden mit mehreren Lagen filzüberzogener, elastischer Bälle (24) aufgefüllt ist.

2. Anlage zur Sichtbarmachung von schnellbewegten Teilen nach Anspruch 1, dadurch gekennzeichnet, daß der Schutzkasten (28) zur Aufnahme des erschütterungsempfindlichen Beschleunigers (3) eine Heizung enthält.

3. Anlage zur Sichtbarmachung von schnellbewegten Teilen nach Anspruch 1, dadurch gekennzeichnet, daß die Bälle (24) gasgefüllt sind.

### Claims

1. An apparatus for rendering visible moved objects within a housing, especially projectiles in a firing weapon, comprising:

- an accelerator (3) producing an invisible radiation having at least 300 pulses per second;
- a recording equipment (26) containing lead plates (7, 8) serving as radiation protection means;
- an image amplifier (4) for conversion of the radiation of the accelerator into visible radiation;
- a light deflection tube (5) for deflecting the image out of the region of the radiation of the accelerator (3) and
- a film camera (6) for at least 500 images per second characterised in that
- protective box (28) is provided for housing the accelerator (3) which is vibration sensitive
- a double through arrangement (22, 23) forming there between a space which is filled at the front, at both sides, at the rear and at its base with a number of respective layers of felt covered elastic ball elements (24).

2. An apparatus for rendering visible moved objects as defined in Claim 1, wherein said protection cabinet (28) for housing the vibration sensitive accelerator (3) contains heating means.

3. An apparatus for rendering visible moved objects as defined in Claim 1 wherein said balls (24) are gas filled ball elements.

**Revendications**

1. Installation pour visualiser des pièces se déplaçant rapidement dans un boîtier notamment des obus dans une arme à feu avec un accélérateur (3) qui génère un rayonnement invisible d'au moins 300 impulsions par seconde, avec un appareil de réception (27) comportant des plaques de plomb (7, 8) comme moyens de protection contre le rayonnement, un convertisseur d'image (4) pour convertir l'irradiation accélérée en un rayonnement visible, une installation de déviation (5) pour extraire l'image de la zone du rayonnement de l'accélérateur et une caméra (6) pour au moins 500 images par seconde, caractérisée en ce qu'un boîtier de protection (28) pour recevoir l'accélérateur (3) sensible aux secousses, comporte une double cuvette (22, 23) et l'intervalle entre les deux cuvettes (22, 23) est rempli à l'avant, sur les deux côtés, à l'arrière et sur le fond par plusieurs couches de balles (24) élastiques revêtues de feutre.

2. Installation pour visualiser des pièces déplacées rapidement selon la revendication 1, caractérisée en ce que le boîtier de protection (28) pour recevoir l'accélérateur (3) sensible aux secousses comporte un chauffage.

3. Installation pour visualiser des pièces déplacées rapidement selon la revendication 1, caractérisée en ce que les balles (24) sont remplies de gaz.

FIG. 1

FIG. 2

FIG. 3

FIG. 4